# EUROPÄISCHE PATENTSCHRIFT

(11) **EP 0 750 744 B1**
(45) Veröffentlichungstag und Bekanntmachung des Hinweises auf die Patenterteilung: **26.05.1999**
(21) Anmeldenummer: 95913018.8
(22) Anmeldetag: 10.03.1995
(51) Int. Cl.: G01N 27/28

(54) **MINIATURISIERTE DURCHFLUSSMESSKAMMER MIT INTEGRIERTEN CHEMO- UND/ODER BIOSENSORELEMENTEN**
MINIATURIZED FLOW-MEASUREMENT CHAMBER WITH INTEGRATED CHEMO AND/OR BIO-SENSOR ELEMENTS
CHAMBRE DE MESURE DE DEBIT MINIATURISEE COMPORTANT DES ELEMENTS DE DETECTION CHIMIQUE ET BIOLOGIQUE

(30) Priorität: 12.03.1994 DE 4408352
(43) Veröffentlichungstag der Anmeldung: 02.01.1997
(73) Patentinhaber: KNOLL, Meinhard, 48565 Steinfurt (DE)
(72) Erfinder: KNOLL, Meinhard, 48565 Steinfurt (DE)
(74) Vertreter: Pfenning, Meinig & Partner
(86) Internationale Anmeldenummer: DE9500339
(87) Internationale Veröffentlichungsnummer: WO9525275

(56) Entgegenhaltungen:
- EP-A- 0 299 778
- EP-A- 0 455 508
- WO-A-88/08973
- WO-A-92/21020
- GB-A- 2 236 903
- US-A- 5 238 548
- SENSORS AND ACTUATORS B, Bd. B08, Nr. 2, 1.Mai 1992 Seiten 205-208, XP 000286957 SHUICHI SHOJI ET AL 'MICRO FLOW CELL FOR BLOOD GAS ANALYSIS REALIZING VERY SMALL SAMPLE VOLUME*'
- THIRD INTERNATIONAL CONFERENCE ON SOLID-STATE SENSORS AND ACTUATORS (TRANSDUCERS '85), PHILADELPHIA, PA, USA, 11-14 JUNE 1985, Bd. 8, Nr. 1, ISSN 0250-6874, SENSORS AND ACTUATORS, SEPT. 1985, SWITZERLAND, Seiten 11-22, VAN DER SCHOOT B ET AL 'An ISFET-based microlitre titrator: integration of a chemical sensor-actuator system'
- EUROSENSORS VI, SAN SEBASTIAN, SPAIN, 5-7 OCT. 1992, Bd. B15, Nr. 1-3, ISSN 0925-4005, SENSORS AND ACTUATORS B (CHEMICAL), AUG. 1993, SWITZERLAND, Seiten 211-213, VAN DER SCHOOT B H ET AL 'Modular setup for a miniaturized chemical analysis system'

## Beschreibung

Die Erfindung betrifft eine miniaturisierte Durchflußmeßkammer mit integrierten Chemo- und Biosensorelementen, ein Verfahren zu dessen Herstellung sowie dessen Verwendung.

Es ist bekannt, daß Chemo- und Biosensorelemente in Durchflußsysteme integriert werden. Bekanntestes Beispiel ist die Fließinjektionsanalyse (FIA) (z.B.: G. Schwedt: Taschenatlas der Analytik, Georg Thieme Verlag Stuttgart, 1992).

Ähnliche Vorrichtungen werden als Mikrodialysesysteme zur Bestimmung der Glukosekonzentration im menschlichen Gewebe eingesetzt (z.B.: F.J. Schmidt et al.: Calibration of a wearable glucose sensor, The International Journal of Artificial Organs, Vol. 15, No.1, 1992, pp 055-061).

Es ist ebenso bekannt, daß Chemo- und Biosensorelemente, die mit Polymermembranen und Gelschichten zur Stofferkennung arbeiten, in Siliziumtechnologie nach dem Containment-Prinzip hergestellt werden können (DE 41 15 414 A1 bzw. WO 92/21020 A1). Hierbei werden die Polymermembranen und Gelschichten nicht auf der Oberfläche von Silizium-Chips sondern im Chip-Inneren realisiert. Dies hat gegenüber planaren Strukturen erhebliche Vorteile hinsichtlich einer einfachen Herstellung und hoher Langzeitstabilität.

Diese Sensoren in Siliziumtechnologie lassen sich auch in vorgefertigte Durchflußmeßzellen einbauen.

Die WO 92/21020 A1 zeigt einen miniaturisierten Chemo- und Biosensor, der aus einem als plattenförmiger Träger ausgebildeten Substrat besteht, in dem ein Containment eingebracht ist, das auf den beiden Seiten des Trägers je eine Öffnung besitzt, wobei sich das Containment unterschiedlich große Öffnungen bildend von einer Seite des Trägers zur anderen verjüngt. Die zu messende Flüssigkeit fließt dabei an der kleineren Öffnung des Containments vorbei.

Die Druckschrift "Sensors and Actuators B", Bd. B08, Nr. 2, 1. Mai 1992, S. 205-208, zeigt eine Durchflußmeßanordnung für diskontinuierliche Messungen. Diese weist in einen Träger eingelassene, sich verjüngende Durchführungen auf, die mit flüssigen Medien befüllt und mit Photolackschicht zur zu messenden Flüssigkeit hin verschlossen sind. Das eigentliche Sensorelement ist auf der gegenüberliegenden Seite außerhalb der Durchführung in dem Medium angeordnet.

Die GB 2 236 903 A zeigt ebenfalls einen miniaturisierten Sensor, der aus einem als plattenförmiger Träger ausgebildeten Substrat besteht, in den sich erweiternde Durchführungen eingebracht sind. Das eigentliche Sensorelement ist dabei an der größeren Öffnung der Durchführung angeordnet und verschließt diese und ist über die Durchführung unmittelbar mit der zu messenden Flüssigkeit verbunden.

Nachteilig am beschriebenen Stand der Technik ist, daß bisher keine Sensoren beschrieben wurden, die nach dem Containmentprinzip arbeiten und gemeinsam mit einer Durchflußmeßkammer auf einem Chip integriert sind.

Der Erfindung liegt daher die Aufgabe zugrunde, Chemo- und Biosensorelemente nach dem Containmentprinzip gemeinsam mit einer Durchflußmeßkammer auf einem Chip zu integrieren. Die Meßkammer mit den integrierten Sensoren soll vorzugsweise in Siliziumtechnologie, aber auch in anderen Technologien, realisierbar sein. Darüber hinaus sollen die Sensoren mit der Durchflußmeßkammer z.B. gemeinsam mit Pumpen, Reaktionsstrecken, Ventilen usw. in Mikrosysteme integrierbar sein.

Die Aufgabe wird hinsichtlich des Sensor selbst durch die kennzeichnenden Merkmale des Anspruches 1, in bezug auf das Verfahren zur Herstellung des Sensors durch die kennzeichnenden Merkmale der Ansprüche 14 und 17 und hinsichtlich der Verwendung durch die kennzeichnenden Merkmale des Anspruches 13 gelöst. Die Unteransprüche zeigen vorteilhafte Weiterbildungen auf.

Erfindungsgemäß wird somit vorgeschlagen einen kanalförmigen Hohlraum in einem Chip so anzuordnen, daß er mit der kleineren Öffnung des Containments in Kontakt steht. Im Bereich der kleinen Containmentöffnung bildet dann das im Containment eingebrachte stofferkennende Material die aktive Sensoroberfläche, an der das flüssige Meßmedium über den Kanal herangeführt und so mit der Sensoroberfläche in Kontakt treten kann.

Bevorzugt wird bei der erfindungsgemäßen Durchflußmeßkammer ein Si-Substrat als Träger eingesetzt. Die Erfindung schließt aber auch alle anderen geeigneten Materialien mit ein. Die für die Sensoranordnung anwendbaren, stofferkennenden Membranmaterialien sowie die Ausgestaltung des Containment und des bevorzugten Si-Trägers selbst sind aus der DE 41 15 414 bekannt. Auf den Offenbarungsgehalt dieses Dokumentes wird deshalb ausdrücklich bezug genommen.

Bevorzugt werden als stofferkennende Membranmaterialien solche eingesetzt, die aufgrund ihres Fließverhaltens durch eine der Öffnungen, vorzugsweise die große Öffnung, auf der vorderseitigen Oberfläche in das Containment eingebracht werden können. Die Einfüllung kann z.B. mit einer automatischen Dispensiervorrichtung nach dem Tintenstrahlprinzip oder auch nach dem in der DE 41 15 414 beschriebenen Verfahren erfolgen.

Für potentiometrische und insbesondere amperometrische Biosensoren lassen sich alle aus dem Stand der Technik bisher bekannten Immobilisierungsmaterialien einsetzen. Beispiele hierfür sind Gelatine, Kollagen, Alginate, Agar, Cellulosetriacetat, Silicongummi, Polyvinylalkohol, Polyurethan, HEMA und alle anderen bekannten Materialien. Fotovernetzbare Materialien können nach dem Einfüllen durch die obere oder untere Containmentöffnung durch UV-Bestrahlung vernetzt werden.

In diese Materialien werden die aktiven stofferkennenden Komponenten, wie Enzyme oder Antikörper immobilisiert. Dies kann nach bekannten Verfahren, wie z.B. F. Scheller, F. Schubert: Biosensoren, Birkhäuser Verlag, Berlin, 1989, erfolgen. Die elektrischen Kontaktschichten, die ja in das mit dem stofferkennenden Membranmaterial gefüllte Containment hineinführen, bestehen bevorzugt aus Edelmetallfilmen wie Platin, Gold oder Silber. Als elektrische Kontaktschichten können gleichfalls alle anderen durch die bekannten Dünnschichttechnologie wie Aufdampfen oder Aufsputtern erzeugten und anschließend fotolithographisch strukturierten Filme eingesetzt werden. Ebenso ist es möglich, diese Metallfilmstrukturen durch Schattenmasken hindurch aufzudampfen oder aufzusputtern oder aus einer Lösung nach dem Elektrospray-Verfahren aufzusprühen. Anstelle der Edelmetalle können aber auch elektrisch leitfähige Materialien wie Graphit oder andere verwendet werden. Für die Durchflußmeßkammer ist es, wie auch in der DE 41 15 414 bereits beschrieben, vorteilhaft, das Substrat mit einer Isolationsschicht zu überziehen. Geeignet hierfür sind insbesondere SiO₂ und/oder andere Dielektrika, wie z.B. S₃N₄. Es ist weiter bevorzugt, mindestens die oberseitige Containmentöffnung mit einer Verkapselungsschicht zu versehen.

Erfindungsgemäß wird ja ein wie vorstehend beschriebener Träger, bevorzugt ein Si-Träger, mit den eingebrachten Containments mit der zweiten Oberfläche mit mindestens einer Platte verbunden, wobei der eingebrachte Hohlraum so ausgebildet ist, daß er mit der kleineren Öffnung des Containment in Kontakt steht. Bevorzugt wird der kanalförmige Hohlraum auf der Seite des Si-Trägers eingebracht, auf der sich die kleinere Öffnung des Containments befindet. Dadurch kann nun eine Kanalstruktur ausgebildet werden, die mit der kleineren Öffnung des Containments in Kontakt steht. Alternativ ist es jedoch auch möglich, den kanalförmigen Hohlraum nicht hinter den Si-Träger einzubringen, sondern in der mit dem Si-Träger verbundenen Platte. Wesentlich ist, daß jeweils ein Kontakt des kanalförmigen Hohlraumes mit der kleineren Öffnung des Containments hergestellt wird. Der kanalförmige Hohlraum kann deshalb auch dadurch ausgebildet werden, daß er durch Vertiefungen sowohl im Si-Träger wie in der Platte gebildet wird. Die Platte selbst kann dabei entweder aus Glas, fotostrukturierbarem Glas, Keramik, Green Tape, Kunststoff oder anderen geeigneten Materialien bestehen. Eine weitere Ausgestaltung der Erfindung sieht vor, daß in den kanalförmigen Vertiefungen Metallfilme als Elektroden durch die bekannten Dünnschichttechnologien eingebracht werden.

Die Erfindung betrifft weiterhin ein Verfahren zur Herstellung der vorstehend beschriebenen miniaturisierten Durchflußmeßkammer. Verfahrensmäßig kann dabei so vorgegangen werden, daß entweder der kanalförmige Hohlraum in die zweite Oberfläche des Si-Wafers eingebracht wird und dann anschließend dieser kanalförmige Hohlraum mittels der Platte verschlossen wird, oder es wird eine geeignete Struktur in die Platte eingebracht und diese dann mit der zweiten Oberfläche des Trägers verbunden.

Das Einbringen des Containment in den Wafer ist grundsätzlich schon aus der DE 41 15 414, am Beispiel des Si-Wafers, bekannt. Die Erfindung schließt dabei dieses vorbekannte Verfahren zur Herstellung der Containmentstruktur ausdrücklich mit ein.

Die Ausbildung der Kanalstruktur in der zweiten Oberfläche des Wafers erfolgt bevorzugt durch anisotrope oder isotrope Ätzprozesse. Das anschließende Verschließen des Kanals erfolgt nach dem Verfahren des anodischen Bondens mit einer Platte, z.B. einem Glasdeckel, so daß ein vollständig abgedeckter Kanal entsteht, durch den dann das Meßmedium an die aktive Oberfläche des Sensors herangeführt werden kann. Der in dem Wafer strukturierte Kanal kann auch mit einem Polymerfilm aus fotostrukturierbarem Trockenresist durch Auflaminieren abgedeckt werden oder mit einer Kunststoffolie, die mittels Klebstoff mit dem plattenförmigen Träger verbunden wird.

Wenn die kanalförmige Vertiefung sich in der Platte selbst befinden soll, kann dies z.B. durch Ätzen erfolgen und die so strukturierte Platte durch anodisches Bonden mit dem Wafer verbunden werden. Wie bereits vorstehend ausgeführt, ist es auch möglich, die beiden vorstehend beschriebenen Verfahrensvarianten zu kombinieren, d.h. einerseits eine Vertiefung sowohl in die zweite Oberfläche des Wafers einzubringen und andererseits eine Vertiefung in die Platte zu erzeugen und somit einen Hohlraum zu realisieren.

Die mit dieser Anordnung durchzuführenden Messungen können in bekannter Weise, je nach Analyt und stofferkennendem Membranmaterial, nach dem potentiometrischen oder amperometrischen Prinzip erfolgen. Hierfür wird die Meßkammer mit dem Chemo- oder Biosensor vorzugsweise in einer FIA-Anordnung eingesetzt. Es ist aber ebenso möglich, Meßkammer und Sensor in anderen Durchflußanordnungen zu verwenden. Darüber hinaus können die Sensoren mit der Durchflußmeßkammer mit Hilfe der bekannten Mikrostrukturtechnologien gemeinsam mit Pumpen, Reaktionsstrecken, Ventilen und anderen Systemkomponenten in Mikrosysteme integriert werden.

Die mit der Erfindung erzielten Vorteile bestehen insbesondere darin, daß Sensor und Durchflußkammer auf einem Träger (Chip) realisiert sind und somit eine Integration von Chemo- und Biosensoren in Mikrosysteme möglich ist. Hierbei können die bekannten Vorteile der Mikrostrukturtechnik hinsichtlich der Massenproduktionstauglichkeit, Zuverlässigkeit und Miniaturisierbarkeit genutzt werden.

Weitere Merkmale, Einzelheiten und Vorzüge der Erfindung ergeben sich aus der folgenden Beschreibung bevorzugter Ausführungsformen der Erfindung sowie anhand der Zeichnungen. Hierbei zeigen:
- **Figur 1**: einen Sensor nach dem Containmentprinzip mit einer Kanalstruktur im Si-Träger in perspektivischer Darstellung,
- **Figur 2**: die Anordnung nach Figur 1 im Schnitt,
- **Figur 3**: einen Sensor nach dem Containmentprinzip analog Figur 1 in perspektivischer Darstellung, jedoch mit zwei Containments,
- **Figur 4**: zeigt in perspektivischer Darstellung einen Sensor nach dem Containmentprinzip, wobei hier die Kanalstruktur in der Platte selbst eingebracht ist,
- **Figur 5**: zeigt in vereinfachter Darstellung die Möglichkeiten zum Zu- und Abführen des flüssigen Mediums.

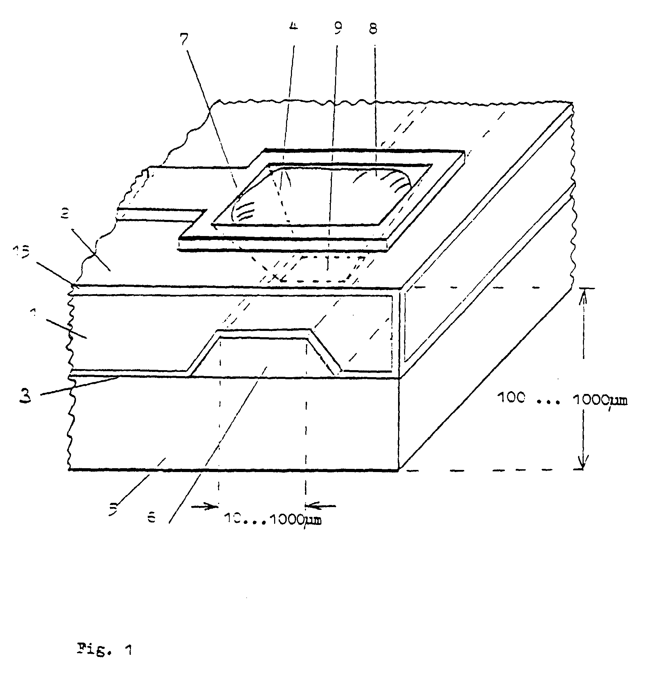

Die Figur 1 zeigt einen Sensor nach dem Containment-prinzip, der aus einem Silizium-Wafer 1 mit Containmentstruktur 4, Metallfilm 7 und einem stofferkennenden Membranmaterial 8 besteht. Die Herstellung ist aus der DE 41 15 414 bekannt. Hierin ist das Silizium mit einem isolierenden Überzug 15 aus SiO₂ und ggf. zusätzlich mit einem anderen Dielektrikum (z.B. Si₃N₄) überzogen. Das Containment 4 ist verjüngend von der vorderseitigen Oberfläche 2 zur zweiten Oberfläche 3 ausgeführt.

Vor oder nach der Herstellung dieser Sensorstruktur wird durch bekannte anisotrope oder isotrope Ätzprozesse die kanalförmige Vertiefung 6 in das Silizium eingebracht. Dieser Kanal 6 wird anschließend nach dem Verfahren des anodischen Bondens mit einem Glasdeckel 5 verschlossen, so daß ein abgedeckter Kanal entsteht, durch den das Meßmedium an der aktiven Oberfläche des Sensors (kleine Öffnung 9) vorbeigeführt werden kann. Die Abmessungen des Kanals liegen im Bereich von 10 bis 1.000 µm, je nach Anforderungen, die Gesamthöhe des Chips beträgt 100 bis 1.000 µm.

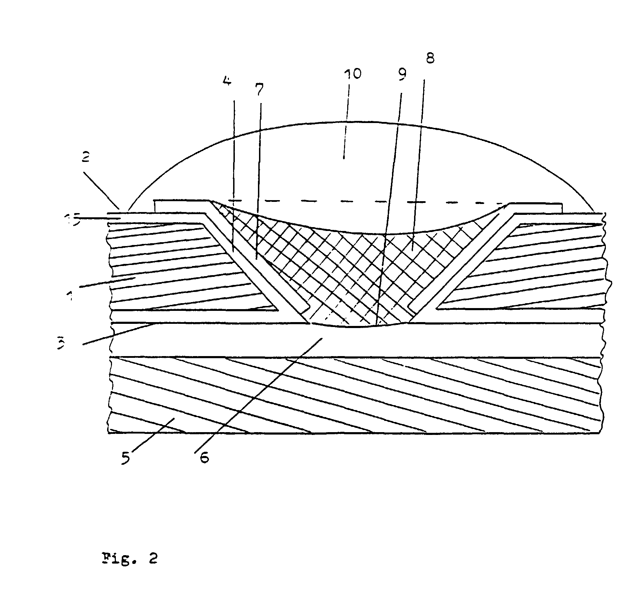

In der Figur 2 ist die Anordnung nach Figur 1 im Schnitt dargestellt. Der Schnitt verläuft längs der kanalförmigen Vertiefung. Zusätzlich zu Figur 1 ist in Figur 2 gezeigt, wie die membrangefüllte Containmentstruktur mit einer Verkapselungsschicht 10 abgedeckt ist.

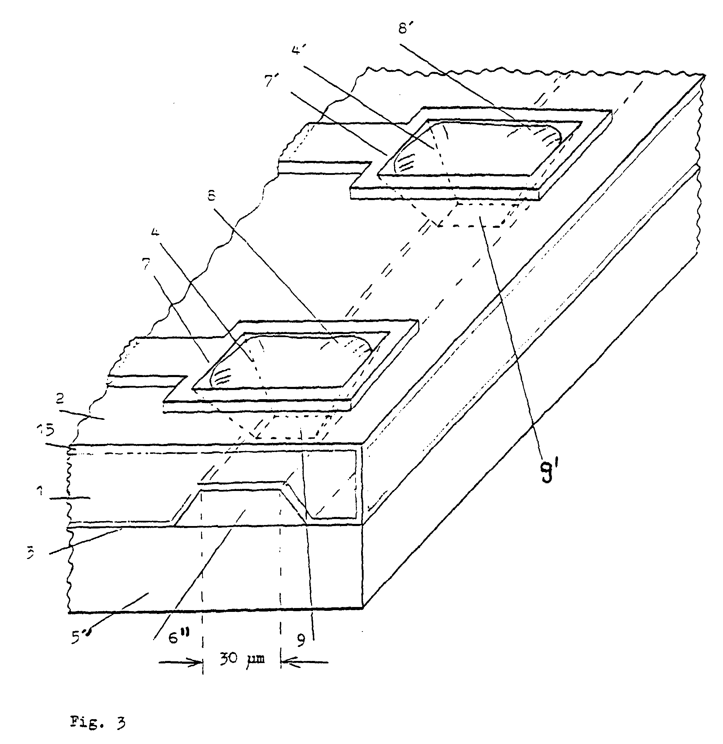

Die Figur 3 zeigt eine Anordnung mit zwei Containmentsensoren nach Figur 1. Die beiden aktiven Sensoroberflächen (Öffnung 9 und 9') haben hier Kontakt mit dem Meßmedium, das durch den Kanal (6") geführt wird.

Alternativ zu Beispiel nach Figur 1 ist hier die Abedeckung des Kanals (6") mit einem Polymerfilm (5") realisiert. Dieser Film kann z.B. ein fotostrukturierbarer Trockenresist sein, der nach den bekannten Verfahren auflaminiert wird. Der Film kann aber auch aus einer Kunststoffolie bestehen, die durch Klebstoff mit dem plattenförmigen Träger verbunden ist.

Zur Verwendung als Glucosesensor bestehen die stofferkennenden Membranmaterialien im ersten Containment (4) z.B. aus Gelatine mit dem Enzym GOD und im zweiten Containment (4') aus Gelatine ohne das Enzym GOD. Die Messung erfolgt hier nach dem amperometrischen Prinzip durch Anlegen einer elektrischen Spannung von ca. 0,6 Volt jeweils zwischen den Platinfilmen (7) und (7') und einer externen oder im Kanal 6" angeordneten Referenzelektrode und durch Messung des Stromes.

Werden mehr als eine Containmentstruktur in der Durchflußanordnung verwendet, so ergibt sich ein Multisensorsystem in einer Durchflußmeßkammer.

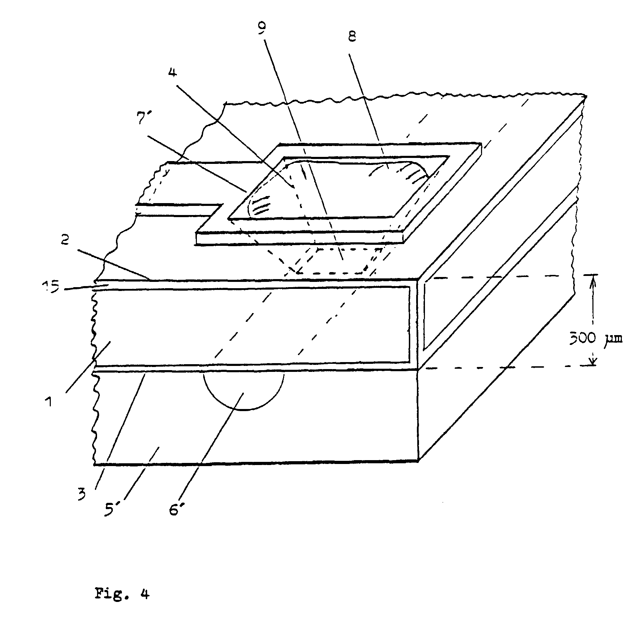

In der Figur 4 ist ein Ausführungsbeispiel dargestellt, bei dem die kanalförmige Vertiefung (6') in der Abedeckplatte (5') z.B. durch Ätzen erzeugt ist. Diese mit der kanalförmigen Vertiefung versehene Abdeckplatte wird durch anodisches Bonden mit dem Siliziumwafer verbunden. Der Si-Wafer hat hier eine Dicke von 300 µm.

In die kanalförmigen Vertiefungen nach den Figuren 1 bis 4 können auch Metallfilme als Elektroden eingebracht werden (ohne Abbildung). Wird z.B. an der Kanalinnenwand eine Silberfilm aufgebracht und elektrolytisch chloridisiert, so erhält man eine Ag/AgCl-Referenz-Elektrode, mit der gegen einen oder mehrere Containmentsensoren potentiometrisch oder amperometrisch gemessen werden kann.

Alternativ zu den Ausführungsbeispielen in den Figuren 1 bis 4 kann der plattenförmige Träger auch aus Glas, Keramik, Green Tape, Kunststoff oder anderen Materialien bestehen.

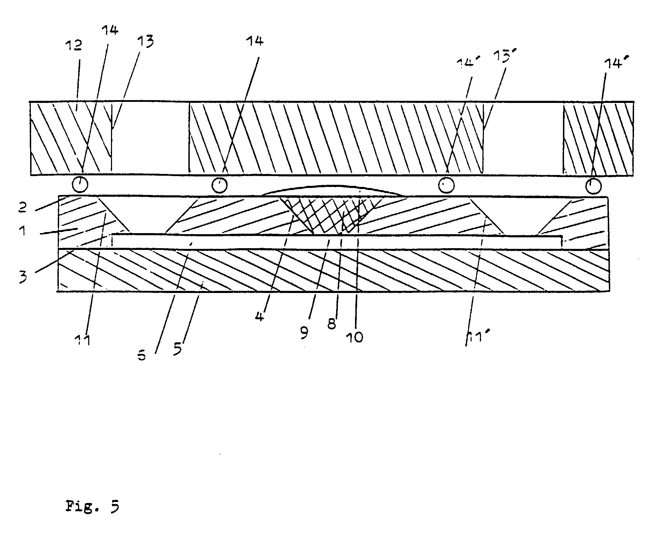

Eine Möglichkeit zum Zu- und Abführen des flüssigen Meßmediums ist in der Figur 5 gezeigt.

Aus Gründen der Vereinfachung ist der Sensor mit dem Containment (4), dem stofferkennenden Membranmaterial (8) und der Verkapselungsschicht (10), aber ohne Isolationsschichten (15) und Metallfilme (7) dargestellt.

Hier ist die kanalförmige Vertiefung (6) der Durchflußanordnung mit mindestens zwei Öffnungen (11) und (11') verbunden, die die kanalförmige Vertiefung mit der ersten Oberfläche (2) des Siliziumwafers verbinden.

Diese Durchflußanordnung wird mit einem Kunststoffblock 12 verbunden, die mindestens zwei Öffnungen (13) und (13') besitzt, durch die das flüssige Meßmedium zu- und abgeführt wird. Zur Abdichtung befinden sich zwischen Silizium-Chip und Kunststoffblock Dichtungsringe (14) und (14').

## Patentansprüche

1. Miniaturisierte Durchflußmeßkammer mit integriertem Chemo- und/oder Biosensorelement, bestehend aus einem als plattenförmiger Träger (1) ausgebildeten Substrat, in dem mindestens ein von der vorderseitigen Oberfläche (2) des Trägers (1) sich zur zweiten Oberfläche (3) verjüngendes Containment (4) eingebracht ist, wobei das das Sensorelement enthaltende Containment auf der vorderseitigen Oberfläche (2) eine größere Öffnung und auf der zweiten Oberfläche (3) eine kleinere Öffnung (9) aufweist, und mindestens einer mit der zweiten Oberfläche (3) verbundenen Platte (5, 5', 5") sowie mindestens einem mit der kleineren Öffnung (9) des Containments (4) in Kontakt stehenden kanalförmigen, als Meßkammer dienenden Hohlraum (6, 6', 6"), der im Träger (1) oder in der Platte (5, 5', 5") oder in beiden ausgebildet ist.

2. Miniaturisierte Durchflußmeßkammer nach Anspruch 1 ,
dadurch gekennzeichnet, daß der Träger (1) ein mit einer Isolationsschicht (15) überzogener Si-Träger ist und daß mindestens eine elektrische Kontaktschicht (7) in das mit dem stofferkennenden Membranmaterial (3) gefüllte Containment (4) führt.

3. Miniaturisierte Duchflußmeßkammer nach mindestens einem der Ansprüche 1 oder 2,
dadurch gekennzeichnet, daß im Bereich der kleinen Containmentöffnung (9) das stofferkennende Material (8) die aktive Sensoroberfläche bildet.

4. Miniaturisierte Durchflußmeßkammer nach mindestens einem der Ansprüche 1 bis 3,
dadurch gekennzeichnet, daß das mit dem stofferkennenden Membranmaterial gefüllte Containment (4) mit einer Verkapselungsschicht (10) verschlossen ist.

5. Miniaturisierte Durchflußmeßkammer nach mindestens einem der Ansprüche 1 bis 4,
dadurch gekennzeichnet, daß der kanalförmige Hohlraum (6) im plattenförmigen Träger (1) eingebracht ist.

6. Miniaturisierte Durchflußmeßkammer nach mindestens einem der Ansprüche 1 bis 4,
dadurch gekennzeichnet, daß der kanalförmige Hohlraum (6') in der Platte (5') ausgebildet ist.

7. Miniaturisierte Durchflußmeßkammer nach mindestens einem der Ansprüche 1 bis 6,
dadurch gekennzeichnet, daß die elektrischen Kontaktschichten (7) aus Edelmetallfilmen wie Platin, Gold, Silber besteht.

8. Miniaturisierte Durchflußmeßkammer nach mindestens einem der Ansprüche 1 bis 7,
dadurch gekennzeichnet, daß die elektrischen Kontaktschichten (7) durch Dünnschichttechnologien wie Aufdampfen oder Aufsputtern erzeugt und anschließend fotolithographisch strukturiert sind oder durch Schattenmasken hindurch aufgedampft oder aufgesputtert oder aus einer Lösung nach dem Elektrospray-Verfahren aufgesprüht sind.

9. Miniaturisierte Durchflußmeßkammer mit integrierten Chemo- und Biosensorelementen nach mindestens einem der Ansprüche 1 bis 8,
dadurch gekennzeichnet, daß die elektrischen Kontaktschichten (7) aus elektrisch leitfähigen Materialien wie Graphit oder anderen bestehen.

10. Miniaturisierte Durchflußmeßkammer nach einem der Ansprüche 1 bis 9,
dadurch gekennzeichnet, daß fotovernetzbare stofferkennende Materialien (8) nach dem Einfüllen durch die obere oder untere Containmentöffnung durch UV-Bestrahlung vernetzt sind.

11. Miniaturisierte Durchflußmeßkammer nach mindestens einem der Ansprüche 1 bis 10,
dadurch gekennzeichnet, daß in den Immobilisierungsmaterialien die aktiven stofferkennenden Komponenten wie Enzyme oder Antikörper immobilisiert sind.

12. Miniaturisierte Durchflußmeßkammer nach mindestens einem der Ansprüche 1 bis 11,
dadurch gekennzeichnet, daß die Sensoren mit der Durchflußmeßkammer mit Hilfe der bekannten Mikrostrukturtechnologien gemeinsam mit Pumpen, Reaktionsstrecken, Ventilen und anderen Systemkomponenten in Mikrosystemen integriert sind.

13. Verwendung einer Miniaturisierten Durchflußmeßkammer nach mindestens einem der Ansprüche 1 bis 12,
dadurch gekennzeichnet, daß Messungen, je nach Analyt und stofferkennenden Membranmaterial nach dem potentiometrischen oder amperometrischen Prinzip vorzugweise in einer FIA-Anordnung oder in anderen Durchflußanordnungen durchgeführt werden.

14. Verfahren zur Herstellung der Durchflußmeßkammer nach mindestens einem der Ansprüche 1 bis 12,
dadurch gekennzeichnet, daß in einen Wafer, bevorzugt in einen Si-Wafer, eine ein Sensorelement enthaltende Containmentstruktur eingebracht wird, die sich von der vorderseitigen Oberfläche des Wafers zur zweiten Oberfläche des Wafers verjüngt und auf der vorderseitigen Oberfläche eine größere Öffnung und auf der zweiten Oberfläche eine kleinere Öffnung aufweist, daß vor oder nach der Herstellung dieser Sensorstruktur entweder durch bekannte anisoptrope oder isotrope Ätzprozesse eine mit der kleineren Öffnung des Containments in Kontakt stehende kanalförmige Vertiefung in die zweite Oberfläche des Wafers eingebracht wird, daß ferner diese kanalförmige Vertiefung anschließend nach dem Verfahren des anodischen Bondens mit einer Platte, z.B. einem Glasdeckel verschlossen wird, so daß ein abgedeckter Kanal entsteht, durch den das Meßmedium an der aktiven Oberfläche des Sensors vorbeigeführt werden kann.

15. Verfahren zur Herstellung nach Anspruch 14,
dadurch gekennzeichnet, daß der Kanal mit einem Polymerfilm aus fotostrukturierbarem Trockenresist durch Auflaminieren abgedeckt wird.

16. Verfahren zur Herstellung nach Anspruch 14,
dadurch gekennzeichnet, daß der Kanal mit einer Kunststoffolie abgedeckt wird, die durch Klebstoff mit dem plattenförmigen Träger verbunden wird.

17. Verfahren zur Herstellung der Durchflußmeßkammer nach mindestens einem der Ansprüche 1 bis 12,
dadurch gekennzeichnet, daß in einen Wafer, bevorzugt in einen Si-Wafer, eine ein Sensorelement enthaltende Containmentstruktur eingebracht wird, die sich von der vorderseitigen Oberfläche des Wafers zur zweiten Oberfläche des Wafers verjüngt und auf der vorderseitigen Oberfläche eine größere Öffnung und auf der zweiten Oberfläche eine kleinere Öffnung aufweist, daß eine kanalförmige Vertiefung in einer Platte z.B. einem Glasdeckel, z.B. durch Ätzen so erzeugt und diese mit der kanalförmigen Vertiefung versehene Platte durch anodisches Bonden mit dem Wafer, bevorzugt einem Si-Wafer, so verbunden wird, daß ein mit der kleineren Öffnung des Containment in Kontakt stehender abgedeckter Kanal entsteht, durch den das Meßmedium an der aktiven Oberfläche des Sensors vorbeigeführt werden kann.

18. Verfahren zur Herstellung nach mindestens einem der Ansprüche 14 bis 17,
dadurch gekennzeichnet, daß in den kanalförmigen Vertiefungen Metallfilme als Elektroden durch die bekannten Dünnschichttechnologien eingebracht werden.

## Claims

1. Miniaturized flow-measurement chamber with integrated chemo- and/or bio-sensor element, consisting of a substrate which is designed as a flat support (1) in which at least one containment (4) tapering from the front surface (2) of the support (1) to the second surface (3) is fitted, the containment containing the sensor element having a larger opening on the front surface (2) and a smaller opening (9) on the second surface (3), and at least one plate (5, 5', 5") which is connected to the second surface (3) and at least one cavity (6, 6', 6") which is in contact with the smaller opening (9) of the containment (4), is in the form of a channel, serves as a measuring chamber and is formed in the support (1) or in the plate (5, 5', 5'') or in both.

2. Miniaturized flow-measurement chamber according to Claim 1, characterized in that the support (1) is an Si support coated with an isolation layer (15), and in that at least one electrical contact layer (7) leads into the containment (4) filled with the substance-recognizing membrane material (8).

3. Miniaturized flow-measurement chamber according to at least one of Claims 1 and 2, characterized in that the substance-recognizing material (8) forms the active sensor surface in the region of the small containment opening (9).

4. Miniaturized flow-measurement chamber according to at least one of Claims 1 to 3, characterized in that the containment (4) filled with the substance-recognizing membrane material is sealed with an encapsulation layer (10).

5. Miniaturized flow-measurement chamber according to at least one of Claims 1 to 4, characterized in that the cavity (6) in the form of a channel is made in the flat support (1).

6. Miniaturized flow-measurement chamber according to at least one of Claims 1 to 4, characterized in that the cavity (6') in the form of a channel is arranged in the plate (5').

7. Miniaturized flow-measurement chamber according to at least one of Claims 1 to 6, characterized in that the electrical contact layers (7) consist of noble metal films such as platinum, gold and silver.

8. Miniaturized flow-measurement chamber according to at least one of Claims 1 to 7, characterized in that the electrical contact layers (7) are produced using thin-film techniques such as vapour deposition or sputtering and are subsequently structured photolithographically, or are vapour-deposited or sputtered through shadow masks or are sprayed from a solution using the electro-spray method.

9. Miniaturized flow-measurement chamber with integrated chemo- and bio-sensor elements according to at least one of Claims 1 to 8, characterized in that the electrical contact layers (7) consist of electrically conductive materials such as graphite or the like.

10. Miniaturized flow-measurement chamber according to one of Claims 1 to 9, characterized in that photo-crosslinkable substance-recognizing materials (8) are cross-linked by exposure to UV radiation after introduction through the upper or lower containment opening.

11. Miniaturized flow-measurement chamber according to at least one of claims 1 to 10, characterized in that the active substance-recognizing components such as enzymes or antibodies are immobilized in the immobilizing materials.

12. Miniaturized flow-measurement chamber according to at least one of Claims 1 to 11, characterized in that the sensors are integrated with the flow-measurement chamber using known microstructure techniques together with pumps, reaction paths, valves and other system components in microsystems.

13. Use of a miniaturized flow-measurement chamber according to at least on of Claims 1 to 12, characterized in that, depending on the analyte and the substance-recognizing membrane material, measurements are taken using the potentiometric or amperometric principle, preferably in an FIA arrangement or in other flow arrangements.

14. Process for producing the flow-measurement chamber according to at least one of Claims 1 to 12, characterized in that a containment structure which contains a sensor element, tapers from the front surface of the wafer to the second surface of the wafer and has a larger opening on the front surface and a smaller opening on the second surface, is introduced into a wafer, preferably into an Si-Wafer, in that before or after this sensor structure is produced, an indentation which is in contact with the smaller opening of the containment and is in the form of a channel, is made in the second surface of the wafer either by known anisotropic or isotropic etching processes, and in that this indentation in the form of a channel is furthermore sealed using the anodic bonding method with a plate, for example a glass cover, so as to result in a covered channel through which the medium to be measured can be fed past the active surface of the sensor.

15. Production process according to Claim 14, characterized in that the channel is covered with a polymer film of photo-structurable dry resist by lamination.

16. Production process according to Claim 14, characterized in that the channel is covered with a plastic sheet which is joined to the flat support using adhesive.

17. Process for producing the flow-measurement chamber according to at least one of Claims 1 to 12, characterized in that a containment structure which contains a sensor element, tapers from the front surface of the wafer to the second surface of the wafer and has a larger opening on the front surface and a smaller opening on the second surface, is introduced into a wafer, preferably into an Si-Wafer, in that an indentation in the form of a channel is produced in a plate, for example a glass cover, for example by etching, is produced in such a way, and this plate provided with the indentation in the form of a channel is joined by anodic bonding to the wafer, preferably an Si wafer, in such a way as to result in a covered channel which is in contact with the smaller opening of the containment and through which the medium to be measured can be fed past the active surface of the sensor.

18. Production process according to at least one of Claims 14 to 17, characterized in that metal films are introduced as electrodes into the indentations in the form of channels using known thin-film techniques.

## Revendications

1. Chambre miniaturisée de mesure de débit comportant un élément formant capteur chimique et/ou biochimique intégré, constituée par un substrat agencé en tant que support (1) en forme de plaque et dans lequel est aménagé au moins un logement (4) qui se rétrécit depuis la surface avant (2) du support (1) en direction de la seconde surface (3), le logement contenant l'élément formant capteur possédant, sur la surface avant (2), une ouverture plus grande et, sur la seconde surface (3), une ouverture plus petite (9), et comportant au moins une plaque (5, 5', 5") reliée à la seconde surface (3) et au moins une cavité en forme de canal (6, 6', 6") qui est reliée à l'ouverture la plus petite (9) du logement (4), sert de chambre de mesure et est formée dans le support (1) ou dans la plaque (5, 5', 5") ou dans ces deux éléments.

2. Chambre miniaturisée de mesure de débit selon la revendication 1, caractérisée en ce que le support (1) est un support recouvert par une couche isolante (15) et qu'au moins une couche de contact électrique (7) pénètre dans le logement (4) rempli par le matériau formant membrane (8) d'identification de substance.

3. Chambre miniaturisée de mesure de débit selon une ou moins des revendications 1 ou 2, caractérisée en ce que le matériau (8) d'identification de substance forme la surface active du capteur, dans la zone de la plus petite ouverture (9) du logement.

4. Chambre miniaturisée de mesure de débit selon au moins l'une des revendications 1 à 3, caractérisée en ce que le logement (4), qui est rempli par le matériau formant membrane d'identification de substance, est fermé par une couche d'encapsulation (10).

5. Chambre miniaturisée de mesure de débit selon au moins l'une des revendications 1 à 4, caractérisée en ce que la cavité en forme de canal (6) est aménagée dans le support en forme de plaque (1).

6. Chambre miniaturisée de mesure de débit selon au moins l'une des revendications 1 à 4, caractérisée en ce que la cavité en forme de canal (6, 6') est formée dans la plaque (5').

7. Chambre miniaturisée de mesure de débit selon au moins l'une des revendications 1 à 6, caractérisée en ce que les couches de contact électrique (7) sont constituées par des films d'un métal précieux, tel que le platine, l'or ou l'argent.

8. Chambre miniaturisée de mesure de débit selon au moins l'une des revendications 1 à 7, caractérisée en ce que les couches de contact électrique (7) sont produites par dépôt par évaporation ou par pulvérisation au moyen de technologies de fabrication de couches minces et sont ensuite structurées par voie photolithographique ou sont déposées par évaporation par pulvérisation à travers des masques d'ombrage ou sont déposées par projection à partir d'une solution, selon le procédé d'électroprojection.

9. Chambre miniaturisée de mesure de débit comportant des éléments formant capteurs chimiques et biochimiques intégrés selon au moins l'une des revendications 1 à 8, caractérisée en ce que les couches de contact électrique (7) sont constituées par des matériaux électriquement conducteurs tels que le graphite ou autres.

10. Chambre miniaturisée de mesure de débit selon l'une des revendications 1 à 9, caractérisée en ce que des matériaux (8) d'identification de substance, qui peuvent être réticulés par photoréticulation, sont réticulés par irradiation par des ultraviolets après le remplissage, par l'ouverture supérieure ou inférieure du logement.

11. Chambre miniaturisée de mesure de débit selon au moins l'une des revendications 1 à 10 caractérisée en ce que dans les matériaux d'immobilisation, les constituants actifs d'identification de substance, tels que des enzymes ou des anticorps, sont immobilisés dans les matériaux d'immobilisation.

12. Chambre miniaturisée de mesure de débit selon au moins l'une des revendications 1 à 11, caractérisée en ce que les capteurs sont intégrés avec la chambre de mesure de débit, conjointement avec des pompes, des lignes de réaction, des soupapes et d'autres composants du système, dans des microsystèmes, à l'aide des technologies connues de fabrication de microstructures.

13. Utilisation d'une chambre miniaturisée de mesure de débit selon au moins l'une des revendications 1 à 12, caractérisée en ce que les mesures sont exécutées, en fonction de l'analyte et du matériau de la membrane d'identification de substance selon le principe potentiométrique ou ampèremétrique, de préférence dans un dispositif FIA ou dans d'autres dispositifs à traversée.

14. Procédé pour fabriquer la chambre de mesure de débit selon au moins l'une des revendications 1 à 12, caractérisé en ce qu'on introduit dans une pastille, de préférence dans une pastille de Si, une structure de logement contenant un élément formant capteur et qui se rétrécit depuis la face avant de la pastille en direction de la seconde face de la pastille et possède, sur la surface avant, une ouverture plus grande et sur la seconde surface une ouverture plus petite, qu'avant ou après la fabrication de cette structure de capteur, on aménage dans la seconde surface de la pastille un renfoncement en forme de canal, qui est relié à la plus petite ouverture du logement, au moyen de processus connus de corrosion anisotrope ou de corrosion isotrope, qu'en outre on ferme ensuite ce renfoncement en forme de canal après le procédé de liaison anodique avec une plaque, par exemple un couvercle en verre, de sorte qu'on obtient un canal recouvert, dans lequel le milieu de mesure peut circuler devant la surface active du capteur.

15. Procédé de fabrication selon la revendication 14, caractérisé en ce que le canal est recouvert, par stratification, par un film polymère formé d'un resist sec pouvant être photostructuré.

16. Procédé de fabrication selon la revendication 14, caractérisé en ce qu'on recouvre le canal par une feuille de matière plastique, que l'on relie au moyen d'un adhésif au support en forme de plaque.

17. Procédé pour fabriquer la chambre de mesure de débit selon au moins l'une des revendications 1 à 12, caractérisé en ce qu'on introduit dans une pastille, de préférence dans une pastille de Si, une structure de logement contenant un élément formant capteur et qui se rétrécit depuis la face avant de la pastille en direction de la seconde face de la pastille et possède, sur la surface avant, une ouverture plus grande et sur la seconde surface une ouverture plus petite, qu'on forme par exemple par corrosion un renfoncement en forme de canal dans une plaque, par exemple un couvercle en verre et qu'on relie cette plaque, pourvue du renfoncement en forme de canal, à la pastille, de préférence à une pastille de Si, par liaison anodique de sorte qu'on obtient un canal recouvert, qui est relié à l'ouverture la plus petite du logement et dans lequel le milieu de mesure peut circuler devant la surface active du capteur.

18. Procédé de fabrication selon au moins l'une des revendications 14 à 17, caractérisé en ce qu'on introduit des films métalliques en tant qu'électrodes dans les renfoncements en forme de canaux, au moyen des technologies connues de fabrication de couches minces.
